# EUROPEAN PATENT SPECIFICATION

(11) **EP 2 668 124 B1**
(45) Date of publication and mention of the grant of the patent: **18.03.2015**
(21) Application number: 12707909.3
(22) Date of filing: 25.01.2012
(51) Int. Cl.: B65G 47/84

(54) **ANNULAR CONVEYOR**
RINGFÖRDERER
TRANSPORTEUR ANNULAIRE

(30) Priority: 25.01.2011 IT TO20110062
(43) Date of publication of application: 04.12.2013
(73) Proprietor: CARLE & MONTANARI - OPM S.p.A., Rozzano (MI) (IT)
(72) Inventor: ABLUTON, Aldo, I-14100 Asti (IT)
(74) Representative: Lovino, Paolo
(86) International application number: PCT/IB2012/050351
(87) International publication number: WO 2012/101589

(56) References cited:
- EP-A1- 0 769 459
- EP-A1- 1 444 134
- EP-A1- 1 739 036
- EP-A1- 2 108 604
- WO-A1-02/26601
- DE-A1-102008 039 036

## Description

### TECHNICAL FIELD

The present invention relates to an annular conveyor, provided with members for transferring products from an input transport line onto an output transport line, in particular for transferring stacks of biscuits placed upon their own edge.

### BACKGROUND ART

The patent application having publication number EP2108604 describes a conveyor according to the preamble of claim 1 provided with suction cups which are arranged along an annular path and are drawn along said path by a motorized belt for transferring products from a respective input transport line onto an output transport line. The suction cups are lowered to pick up the products from the input transport line; which during the advancement towards the output transport line are rotated by 90° about respective vertical axes; and finally are lowered again to deposit the products upon the output transport line.

There is a need to improve a solution of the type just described, so as to adapt it to systems wherein the input transport line and the output transport line travel at different speeds, avoiding collisions of the products.

The patent EP1444134 teaches how to make three grippers rotate about a vertical axis at a variable angular speed, which is adjusted so as to confer upon each gripper a linear peripheral speed substantially equal to the advancement speed of the transport line below, during collection and during deposit of the product.

This solution is not completely satisfactory. In fact, considering the transmission lines arranged at 90°, after one of the three grippers has deposited its product, the peripheral speed of the next gripper must be reduced and synchronized with the advance speed of the input transport line in a rotation angle of less than 30°, which is quite small. Furthermore, the number of grippers used is relatively low, and it is not possible to use this system if the difference in speed between the two transport lines is high, because the angular accelerations of the grippers become excessive.

### DISCLOSURE OF INVENTION

The purpose of the present invention is to provide an annular conveyor, which allows to solve in a simple and economic manner the above mentioned problems.

According to the present invention an annular conveyor is provided, as defined in claim 1.

### BRIEF DESCRIPTION OF THE DRAWINGS

The invention will now be described with reference to the accompanying drawings, which illustrate a non limitative example of embodiment, in which:
- Figure 1 is a perspective view of a preferred embodiment of the annular conveyor according to the present invention;
- Figure 2 is a different perspective view showing the conveyor of figure 1 in enlarged scale and with parts removed for clarity; and
- Figure 3 is another perspective view showing the conveyor of figure 1 in a further enlarged scale and with other parts removed for clarity.

### BEST MODE FOR CARRYING OUT THE INVENTION

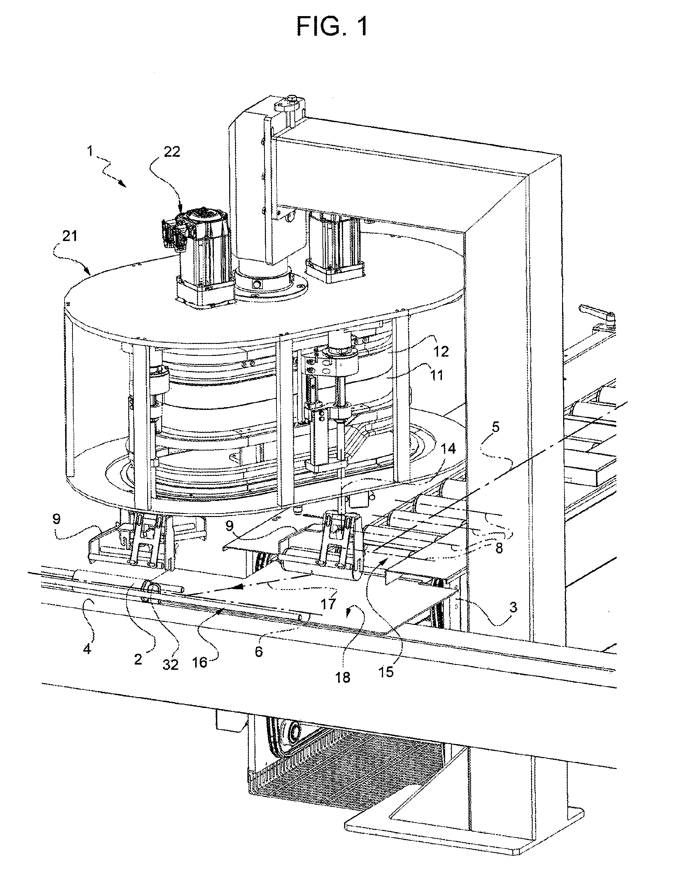

In figure 1, with 1 is indicated a conveyor which transfers the products 2 between two transport lines 3,4. The transport lines 3,4 advance the products 2 along respective directions 5,6, which are substantially horizontal, coplanar and transverse to each other. In particular, the products 2 are defined by stacks of round shaped food articles, such as biscuits or crackers, resting on an edge. In common terminology, this format of articles is called "slug". Each stack has a respective axis 8, which extends along one of the directions 5,6 and is orthogonal to the other of the directions 5,6.

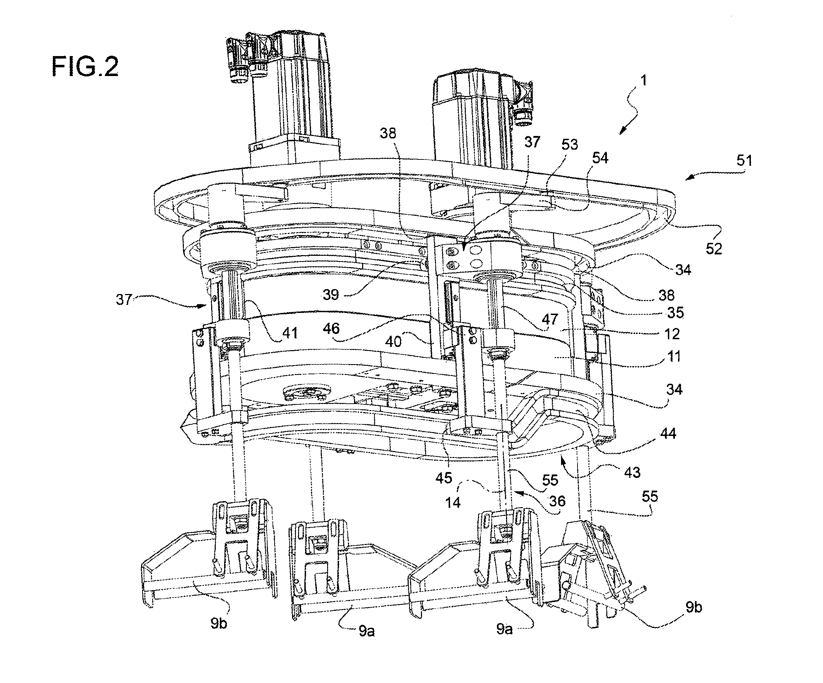

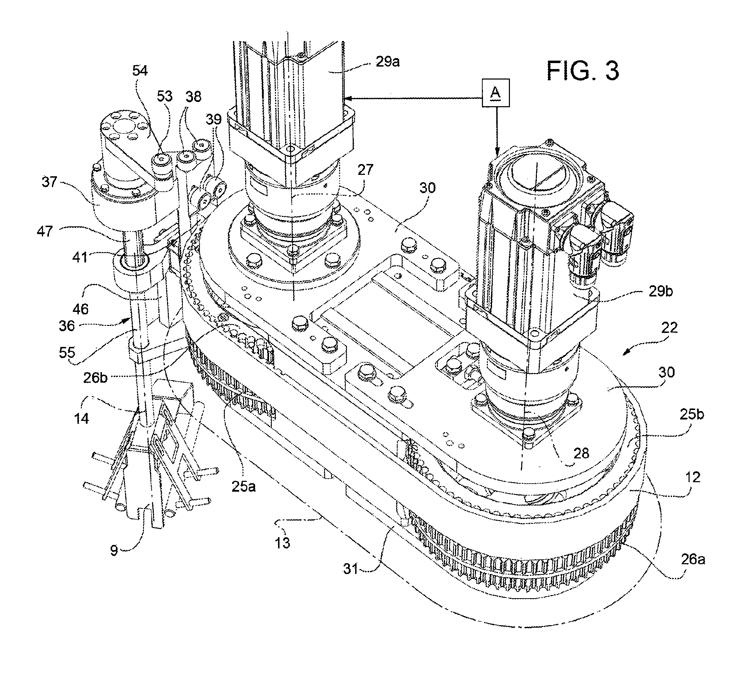

The conveyor 1 comprises a plurality of transfer members 9, which are arranged along an horizontal ring-shaped path 13 (Fig. 3) and are divided into two sets: in Figure 2, the members of the first set are indicated by the reference number 9a, and the members of the second set are indicated by the reference number 9b. The members 9a are alternated to members 9b and are drawn by a belt 11, while the members 9b are drawn by a belt 12. The belts 11 and 12 are arranged at different heights, have the same length and are fitted about wheels having the same diameters, therefore being parallel to each other and to the path 13.

Again with reference to Figure 1, the ends of the transport lines 3 and 4 are arranged below the conveyor 1, and define, respectively, a collection area 15, wherein the path 13 is substantially tangent to the transport line 3, and a deposit area 16, in which the members 9 move away from the products 2 leaving them on the transport line 4. In an advancing branch 17 of the path 13, the members 9 transfer the products 2 from the area 15 to the area 16, accompanying the products 2 upon a horizontal plane 18 arranged between the transport lines 3 and 4. In the example shown, the advancing branch 17 comprises a first curved portion tangent to the direction 5, a straight portion, and a second curved portion tangent to the direction 6. Along the branch 17, the axes 8 of the products 2 are parallel to the direction 6 of the transport line 4. The path 13 has then a return branch that closes the ring to in order to return the members 9 from the area 16 to the area 15.

The conveyor 1 comprises a fixed structure 21 and an assembly 22 for actuating the belts 11 and 12 at speeds independent one from the other. With reference to Figure 3, the assembly 22 comprises two drive wheels 25a, 25b and two driven wheels 26a, 26b. The wheels 25a and 26b are coaxial, overlapped, and can turn about a vertical axis 27 independently of each other. The wheels 25b and 26a are also coaxial, overlapped, and can turn about an axis 28 parallel to axis 27 independently of each other. The belt 11 is fitted around the wheels 25a and 26a, and the belt 12 is fitted around the wheels 25b and 26b. Preferably, the belts 11,12 are provided with teeth which mesh with the teeth of the wheels 25a, 25b, 26a, 26b.

The wheels 25a and 25b are driven by respective motors 29a, 29b by means of respective reducers. The motors 29a, 29b are coaxial to the wheels 25a, 25b, are fixed with respect to upper horizontal plates 30 of the structure 21, protruding above the structure 21, and are controlled by an electronic control and command unit A (shown schematically in Fig. 3). The wheel 26b is idly-mounted, by way of bearings, on a vertical shaft (not shown) that transmits the rotation from the reducer of the engine 29a to the wheel 25a below. The wheel 26a, instead, is idly mounted, by way of bearings, on a vertical pin (not shown) which projects upwardly in a fixed position from a lower horizontal plate 31 of the structure 21.

The unit A is configured so as to actuate the belts 11,12 with respective speeds, which are different from each other. The speeds of the belts 11,12 are adjusted by the unit A in an independent manner, so as to:
- synchronize the arrival of each member 9 in the area 15 with the arrival of a new corresponding product 2 on the transport line 3,
- making the horizontal linear velocity of the member 9 equal to the speed of the transport line 3 in the area 15,
- synchronize the arrival of each member 9 in the area 16 with the arrival of a corresponding push tooth 32 provided on the transport line 4, and
- make the horizontal linear velocity of the member 9 equal to the speed of the push tooth 32 of the transport line 4 in the area 16.

With reference to Figure 2, the conveyor 1 comprises two guide tracks 34 and a support track 35, which are fixed to the structure 21 in a manner not shown and are parallel to the belts 11,12. In particular, the track 35 is arranged above the belt 12 and the tracks 34 are arranged, respectively, above the track 35 and below the belt 11. The members 9 are arranged at the lower ends of respective vertical rods 36, which are coupled to respective carriages 37 drawn by the belts 11 or 12. The carriages 37 are coupled in a sliding manner to the tracks 34,35, for example by means of respective rollers 38,39. The rollers 39 have horizontal rotation axes, whereby the track 35 supports the weight of the carriages 37, of the rods 36 and of the members 9. The rollers 28 have vertical rotation axes, whereby the tracks 34 prevent horizontal transverse movement to the path 13.

The carriages associated to the members 9a are coupled by respective rear plates 40 to the belt 11, but are set apart and decoupled from the belt 12. Conversely, the carriages associated to the members 9b are coupled by respective rear plates 41 to the belt 12, but are set apart and decoupled from the belt 11. Therefore, except for plates 40 and 41, the carriages 37 have the same size and shape.

Along the path 13, the rods 36 are moved along respective vertical axes 14 by a cam and follower device 43 comprising a cam 44, which is fixed to the structure 21, is arranged for example below the tracks 34 and is engaged by follower elements 45. The follower elements 45 are mounted on slides 46, which are coupled in a vertically sliding manner to the carriages 37 and are fixed, respectively, to upper portions 47 of the rods 36. The portions 47, in turn, are coupled to the carriages 37 in a vertically sliding manner and angularly fixed. As mentioned above, the products 2 are drawn upon horizontal plane 18 passing from the transport line 3 to the transport line 4, without vertical movement of the rods 36.

The cam 44, at the area 15, lowers the members 9 to collect the products 2 and, at the area 16, raises the members 9, which then leave the products 2.

Along the branch 17 of the path 13, the members 9 are rotated about axes 14 by a cam and follower device 51 comprising a cam 52, which is fixed to the structure 21 in a manner not shown, is arranged for example above the tracks 34, and is engaged by follower elements 53. The follower elements 53 are arranged at the ends of respective arms 54, which are hinged, respectively, to the carriages 37 around the axes 14, and are coupled in an angularly fixed manner, not shown, to respective lower portions 55 of the rods 36. The portions 55 are angularly rotatable and axially fixed with respect to the portions 47 and with respect to the slides 46, and are fixed in a manner not shown to the members 9. Therefore, along the advancing branch 17, i.e. before the products 2 enter the area 16, the members 9 are rotated about axes 14 by the device 51 so as to align the axes 8 with the direction 6 and keep them aligned until the arrival in the area 16.

Along the return branch of the path 13, the members 9 are rotated in the opposite direction and by the same angle, in particular through the device 51, to return to the starting angular position.

As mentioned above, the motors 29a, 29b are controlled by the unit A so as to rotate the wheels 25a, 25b with variable angular velocity, according to respective motion laws or profiles, which are equal and offset in time of a given range, dependent by the number of members 9 and the length of the path 13. The linear or peripheral velocity imposed to each member 9 is substantially equal to the speed of the transport line 3 when the member 9 comes into contact with the product 2, and substantially equal to the speed of the transport line 4 during the release of the product 2.

For example, if the interval between the products 2 on the transport line 4 is greater than the interval on the transport line 3, the members 9 are accelerated while moving along the branch 17, to be synchronized with the speed of the transport line 4 and are then maintained at a substantially constant horizontal speed during the release of the products 2. During the release of the products 2 and moving away from the transport line 4, the members 9 are lifted. When a member 9a enters the area 16 and then releases its product 2, the member 9b that follows may be coupled to a corresponding product 2 on the transport line 3, traveling at a speed different from that of the member 9a which precedes, thanks to the fact that the members 9a and 9b are drawn by distinct belts 11,12. The same situation occurs when the member 9b then arrives to deposit its product 2 upon the transport line 4, with respect to the member 9a which follows in the area 15.

Therefore, at each turn, the members 9a, 9b approach and move away one from the other along the path 13. The motion of the belts 11,12 is cyclic, namely the velocity profiles are substantially equally repeated at each turn. The velocity laws or profiles are changed when the interval between the products 2 on transport lines 3,4 are varied and preferably can be varied in real time according to sensor measurements which transmit to the unit A, signals relating to operating conditions (speed, position, malfunction, etc ...) of the transport lines, 3,4.

The advantages of the conveyor 1 appear evident due to the description above. In particular, the two belts 11,12 allow to decouple the motion of the member 9a which is releasing its product 2 from the motion of the member 9b that is at the same time coupling to another product 2 to be transferred. Thanks also to the length of the belts 11,12, the path 13 is sufficiently long to be able to calibrate in an optimal way the distance between the members 9a and the members 9b and to be able to insert a relatively high number of members 9a, 9b.

Moreover, the products 2 are introduced onto the transport line 4 and are released in a relatively soft manner, i.e. with low accelerations and shock-free.

Also, the location of the belts 11,12 and the constructional characteristics of the assembly 22 allow to limit the overall dimensions and utilize the same pieces to support and draw both members 9a and members 9b.

From the above it is finally clear that the conveyor 1 described with reference to the attached figures may be subject to modifications and variations which do not depart from the scope of the present invention, as defined in the appended claims.

The members 9a, 9b may be quantified differently other than that illustrated, and/or may be defined by gripping elements, such as suction cups or grippers, to grip the products 2 and possibly be equipped with an upward movement after the gripping of the products 2 in the area 15 and downward before releasing the product 2 in the area 16.

The members 9 could be vertically fixed; or the device 43 could be replaced by a different device for lifting/lowering, for example by a cam for each carriage 37 or by a pneumatic or electric actuator mounted on each carriage 37.

The drive wheels 25a, 25b could be coaxial, and/or a greater number of driven wheels may be provided, for example, used as tensioners of the belts 11,12 and/or used to define a path having a shape different from that of the path 13 .

Finally, the products transported by the conveyor 1 may be different from those illustrated, for example, another type of food, or forming molds, in particular for the realization of chocolate articles, or packaging or containers for food products.

## Claims

1. An annular conveyor (1) comprising:
- a plurality of transfer members (9a, 9b), which can turn about respective vertical axes (14) and are arranged set apart from one another along a substantially horizontal and annular path (13);
- first moving means (11,12,22) comprising motor means (29a, 29b) controlled to move said transfer members (9a, 9b) along said path (13);
- second moving means (51) to rotate said transfer members (9a, 9b) about respective vertical axes (14) during movement along said path (13);
- control means (A) configured to control said motor means; **characterized in that**:
- said first moving means (11,12,22) also comprise a first and a second belt (11,12);
- said transfer members (9) comprise at least one first transfer member (9a) drawn by said first belt (11) and at least one second transfer member (9b) drawn by said second belt (12);
- said first and second belt (11,12) are driven by said motor means (29a, 29b) in response to commands of said control means (A) so as to advance independently of each other and both always in the same direction, in order to advance at speeds different from each other and push respective products along said path independently of each other.

2. The conveyor according to claim 1, **characterized in that** said first and second belt (11,12) are driven so as to couple said first transfer member to a respective product when said second transfer member releases another product.

3. The conveyor according to claim 1 or 2, **characterized in that** said transfer members (9) comprise:
- at least two first transfer members (9a) drawn by said first belt (11), and
- at least two second transfer members (9b) drawn by said second belt (12) and alternating with said first transfer members along said path (13).

4. The conveyor according to any one of the previous claims, **characterized in that** said first belt and said second belt (11,12) are arranged at different heights, have the same length, and are parallel to each other.

5. The conveyor according to any one of the previous claims, **characterized in that** said first and second transfer members (9a, 9b) are carried by respective carriages (37) respectively fixed to said first and second belt; the carriages of the first transfer members (9a) and the carriages of the second transfer members (9b) having substantially the same size and shape.

6. The conveyor according to any one of the previous claims, **characterized in that** said second moving means (51) comprise a fixed cam (52) and, for each said carriage (37), an associated follower element (53); said follower elements (53) engaging said cam (52), being rotatable about said vertical axes (14) with respect to said carriages (37), and being coupled to respective transfer members (9) by vertical rods in an angularly fixed manner.

7. The conveyor according to any one of the previous claims, **characterized in that** said first moving means (22,11,12) comprise two drive wheels (25a, 25b) around which said first and said second belt (11,12) are respectively fitted; said drive wheels (25a, 25b) being rotatable about respective axes that are parallel and set apart from each other; said first moving means (22,11,12) comprise at least two driven wheels (26a, 26b) around which said first and second belts (11,12) are respectively fitted, one of said driven wheels being idle-mounted on a vertical shaft that transmits the rotary motion from said motor means (29a) to one of said drive wheels (25a).

8. The conveyor according to any one of the preceding claims, **characterized by** comprising cam and follower means (43) to raise/lower said transfer members (9) during the movement along said path (13).

9. A product transfer system comprising:
- a conveyor (1) according to any one of the preceding claims, and
- two transport lines (3,4), which are substantially horizontal, advance a row of products (2) along respective directions (5.6), and have respective ends arranged below said conveyor (1) so as to define, respectively, a product collection area (15) and a product deposit area (16);
said directions (5,6) being transverse to each other.

## Patentansprüche

1. Ringförderer (1) mit:
- einer Mehrzahl von Transferelemenfien (9a, 9b), die sich um die jeweiligen vertikalen Achsen (14) drehen können und im Abstand zueinander entlang einer im Wesentlichen horizontalen und ringförmigen Bahn (13) angeordnet sind;
- erste Bewegungsmittel (11, 12, 22), die Motormittel (29a, 29b) aufweisen, die gesteuert werden, um die Transferelemente (9a, 9b) entlang der Bahn (13) zu bewegen;
- zweite Bewegungsmittel (51) zur Drehung der Transferelemente (9a, 9b) um die jeweiligen vertikalen Achsen während der Bewegung entlang der Bahn (13);
- Steuermittel (A), die zur Steuerung der Motormittel ausgebildet sind; **dadurch gekennzeichnet, dass**:
- die ersten Bewegungsmittel (11, 12, 22) auch einen ersten und zweiten Treibriemen (11, 12) aufweisen;
- die Transferelemente (9) mindestens ein erstes Transferelement (9a), das von dem ersten Treibriemen (11) angetrieben wird, und mindestens ein zweites Transferelement (9b), das von dem zweiten Treibriemen (12) angetrieben wird, aufweisen;
- der erste und zweite Treibriemen (11, 12) von den Motormitteln (29a, 29b) in Abhängigkeit von Befehlen der Steuermittel (A) so angetrieben werden, dass sie unabhängig voneinander und beide in die selbe Richtung laufen, um bei unterschiedlichen Geschwindigkeiten zu laufen und die jeweiligen Produkte unabhängig voneinander entlang der Bahn vorzuschieben.

2. Der Förderer nach Anspruch 1, **dadurch gekennzeichnet, dass** der erste und zweite Treibriemen (11, 12) so angetrieben werden, dass das erste Transferelement an das jeweilige Produkt gekoppelt wird, wenn das zweite Transferelement das andere Produkt freigibt.

3. Der Förderer nach Anspruch 1 oder 2, **dadurch gekennzeichnet, dass** die Transferelemente (9) aufweisen:
- mindestens zwei erste Transferelemente (9a), die von dem ersten Treibriemen (11) angetrieben werden, und
- mindestens zwei zweite Transferelemente (9b), die von dem zweiten Treibriemen (12) angetrieben werden und sich mit den ersten Transferelementen entlang der Bahn (13) abwechseln.

4. Der Förderer nach einem der vorhergehenden Ansprüche, **dadurch gekennzeichnet, dass** der erste Treibriemen und der zweite Treibriemen (11, 12) in unterschiedlichen Höhen angeordnet sind, dieselbe Länge haben, und parallel zueinander sind.

5. Der Förderer nach einem der vorhergehenden Ansprüche, **dadurch gekennzeichnet, dass** die ersten und zweiten Transferelemente (9a, 9b) von jeweiligen Wagen (37) getragen werden, die jeweils an dem ersten und zweiten Treibriemen befestigt sind; wobei die Wagen der ersten Transferelemente (9a) und die Wagen der zweiten Transferelemente (9b) im Wesentlichen die gleiche Größe und Form haben.

6. Der Förderer nach einem der vorhergehenden Ansprüche, **dadurch gekennzeichnet, dass** die zweiten Bewegungsmittel (51) eine ortsfeste Steuerkurve (52) und für jeden Wagen (37) ein zugehöriges Kurvenelement (53) aufweisen; die Kurvenelemente (53) an der Steuerkurve (52) angreifen, um die vertikalen Achsen (14) in Bezug auf die Wagen (37) drehbar sind, und mittels vertikaler Stäbe winkelfest an die jeweiligen Transferelemente (9) gekoppelt sind.

7. Der Förderer nach einem der vorhergehenden Ansprüche, **dadurch gekennzeichnet, dass** die ersten Bewegungsmittel (22, 11, 12) zwei Antriebsräder (25a, 25b) aufweisen, die von dem ersten und zweiten Antriebsriemen (11, 12) jeweils umschlungen werden; die Antriebsräder (25a, 25b) um jeweils parallele und im Abstand zueinander angeordnete Achsen drehbar sind; die ersten Bewegungsmittel (22, 11, 12) weisen mindestens zwei Antriebsräder (26a, 26b) auf, die von dem ersten und zweiten Treibriemen (11, 12) jeweils umschlungen werden, wobei einer der Antriebsräder leerlaufend an einem vertikalen Schaft befestigt ist, der die Drehbewegung von den Motormitteln (29a) auf eines der Antriebsräder (25a) überträgt.

8. Der Förderer nach einem der vorhergehenden Ansprüche, **gekennzeichnet durch** Steuerkurven- und Kurvenelementemittel (43) zum Anheben oder Absenken der Transferelemente (9) während der Bewegung entlang der Bahn (13).

9. Ein Produkttransfersystem mit:
- einem Förderer (1) nach einem der vorhergehenden Ansprüche, und
- zwei Transportstrecken (3,4), die im Wesentlichen horizontal sind, eine Reihe von Produkten (2) entlang der jeweiligen Richtungen (5, 6) befördern, und die jeweiligen Enden unterhalb des Förderers angeordnet haben, sodass die Transportstrecken einen Produktsammelbereich (15) bzw. einen Produktablagebereich (16) definieren; wobei die Richtungen (5, 6) zueinander quer verlaufen.

## Revendications

1. Transporteur annulaire (1) comprenant :
- une pluralité d'éléments de transfert (9a, 9b) qui peuvent tourner autour d'axes verticaux (14) respectifs et sont agencés à distance les uns des autres le long d'une trajectoire sensiblement horizontale et annulaire (13) ;
- des premiers moyens de déplacement (11, 12, 22) comprenant des moyens de moteur (29a, 29b) commandés pour déplacer lesdits éléments de transfert (9a, 9b) le long de ladite trajectoire (13) ;
- des seconds moyens de déplacement (51) prévus pour faire tourner lesdits moyens de transfert (9a, 9b) autour des axes verticaux (14) respectifs pendant le déplacement le long de ladite trajectoire (13) ;
- des moyens de commande (A) configurés pour commander lesdits moyens de moteur ;
**caractérisé en ce que** :
- lesdits premiers moyens de déplacement (11, 12, 22) comprennent également une première et une seconde courroie (11, 12) ;
- lesdits moyens de transfert (9) comprennent au moins un premier élément de transfert (9a) tiré par ladite première courroie (11) et au moins un second élément de transfert (9b) tiré par ladite seconde courroie (12) ;
- lesdites première et seconde courroies (11, 12) sont entraînées par lesdits moyens de moteur (29a, 29b) en réponse aux commandes desdits moyens de commande (A) afin d'avancer indépendamment l'une de l'autre et à la fois toujours dans la même direction, afin d'avancer à des vitesses différentes l'une de l'autre et pousser des produits respectifs le long de ladite trajectoire indépendamment les uns des autres.

2. Transporteur selon la revendication 1, **caractérisé en ce que** lesdites première et seconde courroies (11, 12) sont entraînées afin de coupler ledit premier élément de transfert à un produit respectif lorsque ledit second élément de transfert libère un autre produit.

3. Transporteur selon la revendication 1 ou 2, **caractérisé en ce que** lesdits éléments de transfert (9) comprennent :
- au moins deux premiers éléments de transfert (9a) tirés par ladite première courroie (11), et
- au moins deux seconds éléments de transfert (9b) tirés par ladite seconde courroie (12) et alternant avec lesdits premiers éléments de transfert le long de ladite trajectoire (13).

4. Transporteur selon l'une quelconque des revendications précédentes, **caractérisé en ce que** ladite première courroie et ladite seconde courroie (11, 12) sont agencées à des hauteurs différentes, ont la même longueur et sont parallèles l'une par rapport à l'autre.

5. Transporteur selon l'une quelconque des revendications précédentes, **caractérisé en ce que** lesdits premier et second éléments de transfert (9a, 9b) sont portés par des chariots (37) respectifs, respectivement fixés sur lesdites première et seconde courroies ; les chariots des premiers éléments de transfert (9a) et les chariots des seconds éléments de transfert (9b) ayant sensiblement la même taille et la même forme.

6. Transporteur selon l'une quelconque des revendications précédentes, **caractérisé en ce que** lesdits seconds moyens de déplacement (51) comprennent une came fixe (52) et pour chacun desdits chariots (37), un élément de poussoir (53) associé ; lesdits éléments de poussoir (53) mettant en prise ladite came (52), pouvant tourner autour desdits axes verticaux (14) par rapport auxdits chariots (37) et étant couplés aux éléments de transfert (9) respectifs par des tiges verticales d'une manière angulairement fixe.

7. Transporteur selon l'une quelconque des revendications précédentes, **caractérisé en ce que** lesdits premiers moyens de déplacement (22, 11, 12) comprennent deux roues motrices (25a, 25b) autour desquelles ladite première et ladite seconde courroie (11, 12) sont respectivement montées ; lesdites roues monitrices (25a, 25b) pouvant tourner autour des axes respectifs qui sont parallèles et placés à distance l'un de l'autre ; lesdits premiers moyens de déplacement (22, 11, 12) comprennent au moins deux roues menées (26a, 26b) autour desquelles lesdites première et seconde courroies (11, 12) sont respectivement montées, l'une desdites roues menées étant montée au repos sur un arbre vertical qui transmet le mouvement de rotation desdits moyens de moteur (29a) à l'une desdites roues motrices (25a).

8. Transporteur selon l'une quelconque des revendications précédentes, **caractérisé en ce qu'**il comprend des moyens de came et de poussoir (43) pour lever/abaisser lesdits moyens de transfert (9) pendant le mouvement le long de ladite trajectoire (13).

9. Système de transfert de produit comprenant :
- un transporteur (1) selon l'une quelconque des revendications précédentes, et
- deux lignes de transport (3, 4) qui sont sensiblement horizontales, font avancer une rangée de produits (2) le long de directions (5, 6) respectives et ont des extrémités respectives agencées au-dessous dudit transporteur (1) afin de définir respectivement une zone de collecte de produit (15) et une zone de dépôt de produit (16) ;
lesdites directions (5, 6) étant transversales l'une par rapport à l'autre.
